Europäisches Patentamt

(19) European Patent Office

Office européen des brevets

(11) Numéro de publication: **0 241 623**
**B1**

(12) **FASCICULE DE BREVET EUROPEEN**

(45) Date de publication du fascicule du brevet:
**11.04.90**

(21) Numéro de dépôt: **86430047.0**

(22) Date de dépôt: **06.11.86**

(51) Int. Cl.⁴: **B01D 25/12,** B30B 9/22

(54) **Dispositif permettant le montage en séries parrallèles planes de manches filtrantes pour l'épuration des eaux.**

(30) Priorité: **14.04.86 PCT/FR86/00121**

(43) Date de publication de la demande:
**21.10.87 Bulletin 87/43**

(45) Mention de la délivrance du brevet:
**11.04.90 Bulletin 90/15**

(84) Etats contractants désignés:
**AT BE CH DE GB IT LI LU NL SE**

(56) Documents cités:
**BE-A- 884 951
DE-A- 3 240 326
FR-A- 2 532 556
US-A- 3 098 429
US-A- 3 348 578**

(73) Titulaire: **Sauvaget, Jean Claude, Chemin de Banon Le Joucas, F-13100 Aix en Provence(FR)**

(72) Inventeur: **Sauvaget, Jean Claude, Chemin de Banon Le Joucas, F-13100 Aix en Provence(FR)**

(74) Mandataire: **Roman, Michel, CABINET ROMAN 35, rue Paradis, F-13001 Marseille(FR)**

ACTORUM AG

## Description

L'objet de l'invention concerne un dispositif de montage en séries parallèles planes de manches filtrantes pour l'épuration des eaux.

Il est destiné à la filtration et à la séparation en continu des produits fluides et solides dans les secteurs alimentaires, industriels, agricoles et autres.

L'expérience a démontré que la filtration et la séparation en continu des produits fluides et solides par batteries de manches filtrantes souples, ayant chacune sur leur périphérie des manchettes presseuses leur faisant subir des alternances de pression et de décompression, ne permettait pas d'obtenir une régularité de pression, ce qui nuisait au filtrage. De plus ces installations exigent un encombrement important, et les organes d'admission et d'échappement d'air des manchettes preusseuses demandaient des installations complexes et coûteuses.

Le dispositif selon l'invention supprime ces inconvénients en remplaçant les manchettes presseuses périphériques d'une série de manches filtrantes par une paire de matelas gonglables ce qui permet d'une part, grâce à la possibilité de juxtaposer les manches filtrantes, d'en installer une quantité donnée dans un espace plus faible que celui nécessaire à une installation réalisée avec des manchettes presseuses périphériques, d'autre part d'assurer une variation de pression identique dans chacune des manches filtrantes ce qui améliore le rendement de l'installation, et enfin de diminuer le nombre d'organes d'admission et d'évacuation d'air des éléments presseurs.

Il est constitué de tubes filtrants souples disposés en nappe plane entre deux matelas gonflables presseurs positionnés par une armature fixe et rigide servant de point d'appui et faisant subir aux dits tubes filtrants la même succession de pressions et de decompressions suivant un cycle réglable en fonction des produits à filtrer, ces pressions et décompressions assurant l'ouverture et la fermeture des valves d'admission des tubes filtrants.

Sur les dessins annexés, donnés à titre d'exemple non limitatif, d'une des formes de réalisation de l'objet de l'invention:

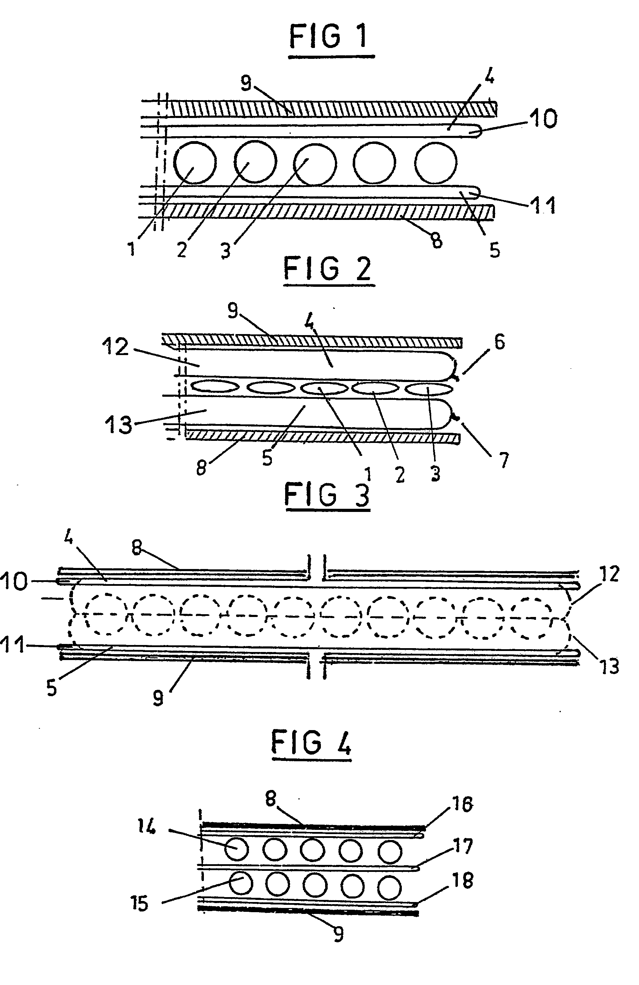

Les figures 1 et 2 représentent les éléments constituant l'ensemble fonctionnel; la figure 3 montre une réalisation du dispositif; la figure 3 montre une réalisation du dispositif; la figure 4 représente une variante d'exécution.

Les manches filtrantes 1, 2, 3 sont juxtaposées entre deux matelas gonflables 4, 5.

Ces matelas gonflables par valves 6, 7 à double effet reliées à un réservoir d'air comprimé sont placées entre deux armatures rigides 8, 9.

Ces matelas sous l'effet de la pression changent de volume et d'une épaisseur réduite 10, 11 peuvent atteindre des dimensions 12, 13, écrasant complètement les manches filtrantes.

Les pressions et contrepressions assurent l'ouverture et la fermeture des valves d'admission des manches filtrantes.

Il est possible (figure 4) d'alterner des nappes de tubes filtrants 14, 15 et des matelas 16, 17, 18, les matelas externes 16, 18 prenant appui sur les parois rigides fixes 8, 9, on a ainsi plusieurs nappes fonctionnant en parallèle.

## Revendications

1. Dispositif de montage en séries parallèles planes de manches filtrantes pour l'épuration des eaux et de tous fluides à épurer dans les domaines alimentaires, industriels, agricole et autres, se caractérisant par l'existence d'éléments tubulaires souples de filtration (1, 2, 3) juxtaposés en nappe plane entre une paire de matelas gonflables (4, 5) prenant appui sur des surfaces rigides fixes (8, 9) et pourvus de valves de gonflage et de dégonflage (6, 7) reliées à un réservoir d'air comprimé, lesdits matelas gonflables étant disposés de telle sorte que par la variation de leur volume (10, 11, 12, 13), il fassent subir aux éléments de filtration (1, 2, 3) les mêmes alternances de pression et de décompression assurant l'ouverture et la fermeture des valves d'admission desdits éléments de filtration.

2. Dispositif suivant la revendication 1 se caractérisant par le fait que plusieurs nappes de tubes filtrants (14, 15) alternent avec plusieurs matelas gonflables parallèles (16, 17, 18) les matelas externes (16, 18) prenant appui sur les parois rigides fixes (8, 9).

## Claims

1. System of filtering sleeves in series and parallel assembly for purification of water and all liquids to be purified in the food, industrial and agricultural fields.

Is typified by the existence of flexible filter tube elements (1, 2, 3) positioned in flat layers between a pair of inflatable mattresses (4, 5) bearing on fixed rigid surfaces (8, 9) and fitted with inflating and deflating valves (6, 7) connected to a compressed air supply, the said mattresses being arranged so that by varying their volume (10, 11, 12, 13) they subject the filtration elements (1, 2, 3), to alternating positive and negative pressures for opening and closing the inlet valves to the said filter elements.

2. Arrangement as per claim 1, characterised by the fact that several layers of filtering tubes (14, 15) alternate with several parallel inflatable mattresses (16, 17, 18), the external mattresses (16, 18) bearing on the fixed rigid walls (8, 9).

## Patentansprüche

1. Vorrichtung mit in ebenen parallelen Reihen angebrachten Filterrohren zur Wasserreinigung in den Nahrungsmittel- Industrie-, Landwirtschafts- und anderen Bereichen, gekennzeichnet durch die Anwesenheit von elastischen, röhrenförmigen Filterelementen (1, 2, 3), die ebenflächig zwischen zwei aufblasbaren Kissen (4, 5) nebeneinander angeordnet sind, wobei die Kissen an festen starren Flächen (8, 9) anliegen und mit an einen Druckluftbehälter angeschlossenen Aufblas- und Ablassventilen (6, 7) ausgerüstet sind; die besagten aufblasbaren Kissen sind dabei so angeordnet, dass sie durch die Änderung ihres Volumens (10, 11, 12, 13) auf die Filterelemente (1, 2, 3) wechselweise Druck und Dekompression ausüben und damit das Öffnen und Schliessen der Einlassventile der besagten Filterelemente bewirken.

2. Vorrichtung nach Anspruch 1, dadurch gekennzeichnet, dass mehrere Lagen von Filterrohren (14, 15) mit mehreren parallelen aufblasbaren Kissen (16, 17, 18) wechselweise angeordnet sind, wobei die äusseren Kissen (16, 18) an den festen starren Wänden (8, 9) anliegen.

FIG 1

FIG 2

FIG 3

FIG 4